# NEUE EUROPÄISCHE PATENTSCHRIFT

(11) **EP 3 493 340 B2**
(45) Veröffentlichungstag und Bekanntmachung des Hinweises auf die Entscheidung über den Einspruch: **18.03.2026**
(45) Hinweis auf die Patenterteilung: 20.01.2021
(21) Anmeldenummer: 18204997.3
(22) Anmeldetag: 07.11.2018
(51) Int. Cl.: H01T 13/08, H01T 13/32, H01T 13/54

(54) **ZÜNDKERZE MIT VERLÄNGERTEM GEHÄUSE UND MASSEELEKTRODE AN DER GEHÄUSEINNENSEITE**
IGNITION PLUG WITH EXTENDED HOUSING AND GROUNDING ELECTRODE ON THE INSIDE OF THE HOUSING
BOUGIE D'ALLUMAGE POURVUE DE LOGEMENT ALLONGÉ ET D'ÉLECTRODE DE MASSE SUR LA FACE INTÉRIEURE DU LOGEMENT

(30) Priorität: 30.11.2017 DE 102017221517
(43) Veröffentlichungstag der Anmeldung: 05.06.2019
(73) Patentinhaber: Robert Bosch GmbH, 70442 Stuttgart (DE)
(72) Erfinder: Odegov, Anatolij, 413121 Engels (RU); Mueller, Bernd, 70825 Korntal-Muenchingen (DE); Stockmeier, Ulrich, 75323 Bad Wildbad (DE)

(56) Entgegenhaltungen:
- DE-A1- 3 148 296
- DE-A1- 3 821 688
- GB-A- 478 929
- US-A- 1 331 282
- US-A- 4 489 596
- US-I4- T 866 031

## Beschreibung

### Stand der Technik

Die Erfindung geht von einer Vorkammer-Zündkerze gemäß dem Oberbegriff des Anspruchs 1 aus. Derartige Vorkammer-Zündkerzen werden zur besseren Entflammung magerer Kraftstoff/Luftgemische verwendet. Besonders günstig wirkt sich ein wirbelförmiger Strömungsverlauf in der Vorkammer aus. Solche Vorkammer-Zündkerzen sind beispielsweise aus der DE 38 21 688 und der DE 29 16 285 bekannt.

Bei der aus der DE 29 16 285 bekannten Vorkammer-Zündkerze wird die Masseelektrode von der Wand der die Vorkammer bildenden Kappe bzw. Zündkammerteil ausgebildet. Die Kappe ist an der brennraumseitigen Stirnseite des Gehäuses angeordnet, wodurch sich die Funkenstrecke zwischen der Wand der Kappe und der Mittelelektrode ausbildet.

Bei der aus der DE 38 21 688 bekannten Vorkammer-Zündkerze, die den Oberbegriff des Anspruchs 1 offenbart, ist die Masseelektrode an der Zylinderwand der Kappe bzw. der Vorkammer als Stift ausgebildet, der radial nach innen in die Vorkammer hereinragt.

Bei beiden Vorkammer-Zündkerzen-Modellen ragt der die Mittelelektrode umfassenden Isolator und damit auch der Isolatorfuß sehr weit in die Vorkammer hinein. Des Weiteren sind die Freiheitsgrade für die Ausgestaltung der Kappe bzw. die Auslegung des Vorkammervolumes durch die Ausbildung der Masseelektrode durch bzw. an der Wand der Vorkammer sehr eingeschränkt.

Im Vergleich zu konventionellen Zündkerzen zeigen Vorkammer-Zündkerzen aufgrund der Raumzündung Vorteile auch bei der Entflammungsstabilität in der Volllast. Das Raumzündungskonzept erlaubt einen stabileren Betrieb des Motors in Richtung des thermodynamischen Optimums in der Volllast.

Somit liegt der vorliegenden Erfindung die Aufgabe zugrunde eine Vorkammer-Zündkerze bereit zu stellen, bei der Isolatorfußbrüche auch bei höheren Mitteldrücken während des Verbrennungsprozesses minimiert bzw. verhindert werden und bei der gleichzeitig der Freiheitsgrad bei der Ausgestaltung der Vorkammervolumens möglichst groß ist.

### Vorteil der Erfindung/ Offenbarung der Erfindung

Diese Aufgabe wird bei der erfindungsgemäßen Vorkammer-Zündkerze der eingangs genannten Art dadurch gelöst, dass die Massenelektrode an der Innenseite des Gehäuses angeordnet ist.

Die erfindungsgemäße Vorkammer-Zündkerze weist ein Gehäuse mit einer Bohrung entlang seiner Längsachse auf. Aufgrund der Bohrung hat das Gehäuse eine Innenseite und eine Außenseite. Eine Kappe ist an dem brennraumseitigen Ende des Gehäuses am Gehäuse angeordnet und befestigt. Die Kappe bildet zusammen mit dem Gehäuse eine Vorkammer aus. Innerhalb des Gehäuses ist ein Isolator angeordnet. Der Isolator weist eine Bohrung entlang seiner Längsachse auf. Innerhalb des Isolators ist eine Mittelelektrode angeordnet. Das brennraumseitige Ende der Mittelelektrode ragt aus dem Isolator heraus. Zusammen mit einer Massenelektrode bildet die Mittelelektrode einen Zündspalt aus, wobei die Massenelektrode an der Innenseite des Gehäuses angeordnet ist.

Dadurch dass die Massenelektrode innerhalb des Gehäuses angeordnet ist und zusammen mit der Mittelelektrode einen Zündspalt bildet, sind der Isolator und die Mittelelektrode ebenfalls vom Gehäuse umgeben. Dadurch ergibt sich die technische Wirkung, dass das den Isolator und den Isolatorfuß umgebene Gehäuse den Isolatorfuß vor den irregulären Druckspitzen schützt, wodurch Isolatorfußbrüche vermieden werden.

Des Weiteren kann die Kappe, die einer brennraumseitigen Stirnseite des Gehäuses angeordnet ist, freier gestaltet werden, wodurch der Ausgestaltung des Vorkammervolumens fast keine Grenzen mehr gesetzt sind.

Weitere vorteilhafte Ausgestaltungen der Erfindung sind Gegenstand der Unteransprüche.

Erfindungsgemäß weist das Gehäuse in seiner Gehäusewand eine Bohrung auf, in die die Massenelektrode eingesteckt und befestigt ist. Beispielsweise ist die Massenelektrode in der Bohrung verschweißt oder verpresst. Die Anordnung der Massenelektrode in einer Bohrung hat den Vorteil, dass sich das Herstellungsverfahren für die erfindungsgemäße Vorkammer-Zündkerze sich vereinfacht und somit günstiger wird.

Es ist erfindungsgemäß, wenn die Bohrung im Bereich eines auf der Außenseite des Gehäuses ausgebildeten Gewindes ausgebildet ist. Das erfindungsgemäß auf der Außenseite des Gehäuses vorgesehene Gewinde dient zum Einschrauben der Vorkammer-Zündkerzen in einem Zylinderkopf.

Erfindungsgemäß weist das Gehäuse auf seiner Außenseite eine Vertiefung auf, in der die Bohrung ausgebildet ist. Dies hat den Vorteil, dass es einfacher ist die Bohrung im Bereich des Gewindes in der Gehäusewand auszubilden. Erfindungsgemäß ist der Außendurchmesser des Gehäuses bei der Vertiefung kleiner als ein Kerndurchmesser des Gewindes, das an der Außenseite des Gehäuses ausgebildet ist. Dies hat den Vorteil, dass die Bohrung und die Vertiefung beim Einschrauben der Zündkerze in einen Zylinderkopf nicht stören.

Beispielsweise kann die Vertiefung als einen Nut, insbesondere eine runde Nut oder eine konische Nut, oder eine ebene Fläche im Bereich des Gewindes ausgebildet sein.

Bei einer Weiterbildung der Erfindung ist vorgesehen, dass die Vorkammer eine hintere Vorkammer und eine vordere Vorkammer hat, wobei ein Volumen der hinteren Vorkammer mindestens 1/3 des gesamten Volumens der Vorkammer beträgt. Dadurch ergibt sich eine gute Entflammung des Luft-KraftstoffGemisches bei gleichzeitiger geringen Belastungen für den Isolator. Dieser Effekt wird verstärkt, wenn das Volumen der hintere Vorkammer mindestens 1/5 des gesamten Volumens der Vorkammer beträgt.

Das Gehäuse und die Kappe bilden zusammen eine Vorkammer mit einem Vorkammervolumen. Die Vorkammer wird einerseits von der Kappe und anderseits von dem Gehäuse und dem Gehäuse-Sitz, dem der Isolator mit seiner Schulter aufliegt, begrenzt. Die Vorkammer und ihr Volumen lassen sich dabei in eine vordere Vorkammer und eine hintere Vorkammer unterteilen. Der Grenze zwischen der vorderen Vorkammer und hinteren Vorkammer wird durch die Position der Masseelektrode bestimmt, d.h. die vordere Vorkammer erstreckt sich von der Kappe bis zu einer Ebene, die auf Höhe der Masseelektrode senkrecht zur der Längsachse X des Gehäuses verläuft. Entsprechend erstreckt sich die hintere Vorkammer von dieser Ebene bis zum Gehäuse-Sitz. Zur Berechnung der Volumina werden die Außenkonturen der Räume berücksichtigt. Zur Vereinfachung der Berechnung werden die Volumen der Masseelektrode, Mittelelektrode und Isolator, die das Volumen der Vorkammer reduzieren würden, nicht berücksichtigt.

### Zeichnung

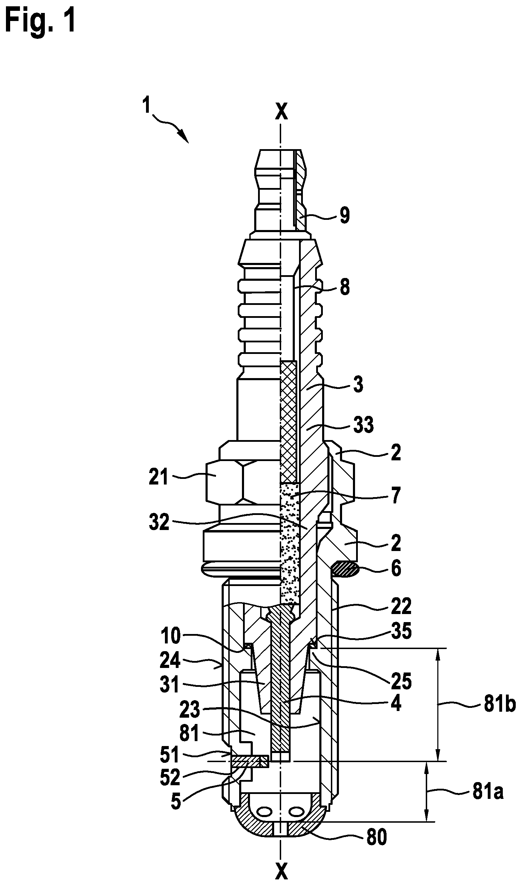

Figur 1 zeigt ein Beispiel für eine erfindungsgemäße Vorkammer-Zündkerze

### Beschreibung des Ausführungsbeispiels

Figur 1 zeigt in einer halb geschnittenen Ansicht eine Zündkerze 1. Die Zündkerze 1 umfasst ein Gehäuse 2. In das Gehäuse 2 ist ein Isolator 3 eingesetzt. Das Gehäuse 2 und der Isolator 3 weisen jeweils entlang ihrer Längsachse eine Bohrung auf. Das Gehäuse hat eine Außenseite 24 und eine Innenseite 23. Die Längsachse des Gehäuses 2, die Längsachse X des Isolators 3 und die Längsachse der Zündkerze 1 fallen zusammen. In den Isolator 3 ist eine Mittelelektrode 4 eingesetzt. Des Weiteren erstreckt sich in den Isolator 3 eine elektrische Kontaktierung, über diese wird die Zündkerze 1 mit einer Spannungsquelle elektrisch kontaktiert. Die elektrische Kontaktierung bildet das Brennraum-abgewandte Ende der Zündkerze 1. Die elektrische Kontaktierung kann einstückig oder auch wie in diesem Beispiel mehreren aus Komponenten, wie beispielsweise einem Anschlussbolzen 8 und eine Anschlußmutter 9, ausgebildet sein.

Der Isolator 3 wird typischerweise in drei Bereich unterteilt: Isolatorfuß 31, Isolatorkörper 32 und Isolatorkopf 33. Die drei Bereiche unterscheiden sich beispielsweise durch unterschiedliche Durchmesser. Der Isolatorfuß 31 ist das Brennraum-zugewandte Ende des Isolators 3. Innerhalb des Isolatorfußes 31 ist die Mittelelektrode 4 angeordnet. Der Isolatorfuß 31 ist in der Regel vollständig innerhalb des Gehäuses 2 angeordnet. In der Regel hat der Isolatorfuß 31 den kleinsten Außendurchmesser am Isolator 3.

Angrenzend an den Isolatorfuß 31 ist der Isolatorkörper 32 angeordnet, der in der Regel vollständig vom Gehäuse 2 umfasst ist. Der Isolatorkörper 32 hat einen größeren Außendurchmesser als der Isolatorfuß 31. Der Übergang zwischen Isolatorfuß 31 und Isolatorkörper 32 ist als Schulter oder Kehle ausgebildet. Dieser Übergang wird auch als Fußkehle oder Isolatorsitz 35 bezeichnet.

Der Isolatorkopf 33 grenzt am Brennraum-abgewandten Ende des Isolatorkörpers 32 an diesem an und bildet das Brennraum-abgewandte Ende des Isolators 3. Der Isolatorkopf 33 ragt aus dem Gehäuse 2 heraus. Der Außendurchmesser des Isolatorkopfs 33 liegt zwischen den Außendurchmessern von Isolatorfuß 31 und Isolatorkörper 32, wobei die Bereiche typischerweise über ihre Länge keinen konstanten Außendurchmesser haben, sondern der Außendurchmesser variieren kann.

Das Gehäuse 2 weist an seiner Innenseite einen Sitz 25 auf. Der Isolator liegt mit seiner Schulter bzw. Isolatorsitz 35 auf dem Gehäuse-Sitz 25 auf. Zwischen dem Isolatorsitz 35 und dem Gehäuse-Sitz 25 ist eine Innendichtung 10 angeordnet.

Zwischen der Mittelelektrode 4 und dem Anschlussbolzen 8 befindet sich im Isolator 3 ein Widerstandselement 7, auch Panat genannt. Das Widerstandselement 7 verbindet die Mittelelektrode 4 elektrisch leitend mit dem Anschlussbolzen 8. Das Widerstandselement 7 ist beispielsweise als Schichtsystem aus einem ersten Kontaktpanat, einem Widerstandspanat und einem zweiten Kontaktpanat aufgebaut. Die Schichten des Widerstandselements unterscheiden sich durch ihre Materialzusammensetzung und dem daraus resultierenden elektrischen Widerstand. Das erste Kontaktpanat und das zweite Kontaktpanat können einen unterschiedlichen oder einen gleichen elektrischen Widerstand aufweisen.

An der Innenseite 23 des Gehäuses 2 ist die Masseelektrode 5 in einer Bohrung 52 angeordnet, so dass die Masseelektrode 5 radial von der Gehäuse-Innenseite 23 in die Bohrung entlang der Längsachse X des Gehäuses 2 hineinragt. Die Masseelektrode 5 und die Mittelelektrode 4 bilden zusammen einen Zündspalt aus. Die Bohrung 52 erstreckt sich von der Außenseite 24 durch die Gehäusewand bis zur Innenseite 23 des Gehäuses 2.

Das Gehäuse 2 weist einen Schaft auf. An diesem Schaft sind ein Mehrkant 21, ein Schrumpfeinstich und ein Gewinde 22 ausgebildet. Das Gewinde 22 dient zum Einschrauben der Zündkerze 1 in eine Brennkraftmaschine. Zwischen dem Gewinde 22 und dem Mehrkant 21 ist ein äußeres Dichtelement 6 angeordnet. Das äußere Dichtelement 6 ist in diesem Ausführungsbeispiel als Faltdichtung ausgestaltet.

Die Bohrung 52 in der Gehäusewand ist im Bereich des Gewindes 22 ausgebildet. Dabei kann die Bohrung 52 für die Masseelektrode 5 und damit auch die Masseelektrode 5 auf jeder beliebigen Höhe im Bereich des Gewindes 22 angeordnet sein. Je nach der Position der Masseelektrode 5 im Bereich des Gewindes 22 ragt entsprechend die Mittelelektrode 4 und mit ihr auch der Isolatorfuß 31 mehr oder weniger weit in die Vorkammer 81 hinein. Je nach gewünschten Verwendungszweck der Vorkammer-Zündkerze kann die Position der Bohrung im Bereich des Gewindes 22 und der Masseelektrode 5 auf der Innenseite 23 des Gehäuses 2 gewählt werden.

Die Bohrung 52 ist in einer Vertiefung 51, wie beispielsweise eine konische oder eine runde Nut, angeordnet. Dabei ist der Außendurchmesser des Gehäuses 2 in der Vertiefung kleiner als der Kerndurchmesser des Gewindes 22.

Die Vertiefung 51 kann beispielsweise durch ein Stanzen des Gehäuses 2 bei der Herstellung der Vorkammer-Zündkerze 1 entstehen. Dabei wird nicht nur der Außendurchmesser des Gehäuses 2 im Bereich der Vertiefung 51 reduziert, sondern auch der Innendurchmesser des Gehäuses 2 im Bereich der Vertiefung 51.

Am Gehäuse 2 ist auf dessen brennraumseitigen Stirnfläche eine Kappe 80 angeordnet. Das Gehäuse 2 und die Kappe 80 bilden zusammen eine Vorkammer 81 mit einem Vorkammervolumen. Die Vorkammer 81 erstreckt sich von der Kappe bis ins Gehäuse 2 hinein und innerhalb des Gehäuses 2 bis zum Gehäuse-Sitz 25, dem der Isolator 3 mit seiner Schulter 35 aufliegt. Der Zwischenraum zwischen Gehäuse 2 und Isolator 3 ist an dieser Stelle mittels einer Innendichtung 10 gasdicht abgedichtet. Die Vorkammer 81 und ihr Volumen lassen sich in eine vordere Vorkammer 81a und eine hintere Vorkammer 81b unterteilen. Der Grenze zwischen der vorderen Vorkammer 81a und hinteren Vorkammer 81b wird durch die Position der Masseelektrode bestimmt, d.h. die vordere Vorkammer 81a erstreckt sich von der Kappe bis zu einer Ebene, die auf Höhe der Masseelektrode senkrecht zur der Längsachse X des Gehäuses verläuft. Entsprechend erstreckt sich die hintere Vorkammer 81b von dieser Ebene bis zum Gehäuse-Sitz 25, auf dem der Isolator 3 und die Innendichtung 10 aufliegen.

## Patentansprüche

1. Vorkammer-Zündkerze (1), aufweisend
• ein Gehäuse (2) mit einer Bohrung entlang seiner Längsachse, wodurch das Gehäuse (2) eine Außenseite (24) und eine Innenseite (23) hat,
• eine Kappe (80), die am brennraumseitigen Ende des Gehäuses am Gehäuse (2) angeordnet und befestigt ist, und die zusammen mit dem Gehäuse (2) eine Vorkammer (81) ausbildet,
• ein innerhalb des Gehäuses (2) angeordneten Isolator (3)
• eine innerhalb des Isolators (3) angeordnete Mittelelektrode (4), und
eine Masseelektrode (5), wobei die Masseelektrode (5) und die Mittelelektrode (4) so angeordnet sind, dass die beiden Elektroden einen Zündspalt ausbilden, wobei die Masseelektrode (5) an der Innenseite (23) des Gehäuses (2) angeordnet ist, das Gehäuse (2) in seiner Gehäusewand eine Bohrung (52) aufweist, in die die Masseelektrode (5) eingesteckt und befestigt ist, wobei das Gehäuse (2) an seiner Außenseite (24) eine Vertiefung (51) aufweist, in der die Bohrung (52) ausgebildet ist, **dadurch gekennzeichnet, dass** das Gehäuse (2) auf seiner Außenseite (24) ein Gewinde (22) zum Einschrauben der Zündkerze in einen Zylinderkopf hat, und wobei die Bohrung (52) in einem Bereich des Gewindes (22) ausgebildet ist, und dass der Außendurchmesser des Gehäuses (2) bei der Vertiefung (51) kleiner ist als ein Kerndurchmesser des Gewindes (22).

2. Zündkerze (1) nach Anspruch 1, **dadurch gekennzeichnet, dass** die Masseelektrode (5) verschweißt oder verpresst ist in der Bohrung (52).

3. Zündkerze (1) nach einem der Ansprüche 1 oder 2, **dadurch gekennzeichnet, dass** die Bohrung (52) in einem Bereich des Gewindes (22) ausgebildet ist.

4. Zündkerze (1) nach einem der vorangehenden Ansprüche, **dadurch gekennzeichnet, dass** die Vertiefung (51) als eine runde Nut, eine konische Nut oder eine ebene Fläche im Bereich des Gewindes (22) ausgebildet ist.

5. Zündkerze (1) nach einem der vorangehenden Ansprüche, **dadurch gekennzeichnet, dass** die Vorkammer (81) eine hintere Vorkammer (81b) und eine vordere Vorkammer (81a) hat, wobei ein Volumen der hinteren Vorkammer (81b) mindestens 1/3 des gesamten Volumens der Vorkammer (81) beträgt.

## Claims

1. Prechamber spark plug (1), having
• a housing (2) with a bore along its longitudinal axis, as a result of which the housing (2) has an outer side (24) and an inner side (23),
• a cap (80) which is arranged and fastened on the housing (2) at the combustion chamber-side end of the housing and which, together with the housing (2), forms a prechamber (81),
• an insulator (3) which is arranged within the housing (2),
• a centre electrode (4) which is arranged within the insulator (3), and
an earth electrode (5), wherein the earth electrode (5) and the centre electrode (4) are arranged such that the two electrodes form a spark gap, wherein the earth electrode (5) is arranged on the inner side (23) of the housing (2), the housing (2) has a bore (52) in its housing wall, the earth electrode (5) being inserted and fastened into said bore, wherein the housing (2) has a recess (51) on its outer side (24), the bore (52) being formed in said recess, **characterized in that** the housing (2) has, on its outer side (24), a thread (22) for screwing the spark plug into a cylinder head, and wherein the bore (52) is formed in a region of the thread (22), and **in that** the outside diameter of the housing (2) at the recess (51) is smaller than a core diameter of the thread (22).

2. Spark plug (1) according to Claim 1, **characterized in that** the earth electrode (5) is welded or pressed in the bore (52).

3. Spark plug (1) according to either of Claims 1 and 2, **characterized in that** the bore (52) is formed in a region of the thread (22).

4. Spark plug (1) according to one of the preceding claims, **characterized in that** the recess (51) is formed as a round groove, a conical groove or a planar area in the region of the thread (22).

5. Spark plug (1) according to one of the preceding claims, **characterized in that** the prechamber (81) has a rear prechamber (81b) and a front prechamber (81a), wherein a volume of the rear prechamber (81b) is at least 1/3 of the total volume of the prechamber (81).

## Revendications

1. Bougie d'allumage (1) de chambre de précombustion, comprenant
• un boîtier (2) ayant un alésage le long de son axe longitudinal, moyennant quoi le boîtier (2) possède un côté extérieur (24) et un côté intérieur (23),
• un capuchon (80), qui est disposé et fixé sur le boîtier (2) au niveau de l'extrémité côté chambre de combustion du boîtier et qui, conjointement avec le boîtier (2), forme une chambre de précombustion (81),
• un isolateur (3) disposé à l'intérieur du boîtier (2),
• une électrode centrale (4) disposée à l'intérieur de l'isolateur (3) et
une électrode de masse (5), l'électrode de masse (5) et l'électrode centrale (4) étant disposées de telle sorte que les deux électrodes forment un espace d'allumage, l'électrode de masse (5) étant disposée au niveau du côté intérieur (23) du boîtier (2), le boîtier (2) présentant dans sa paroi de boîtier un alésage (52) dans lequel l'électrode de masse (5) est insérée et fixée, le boîtier (2) présentant, au niveau de son côté extérieur (24), une cavité (51) dans laquelle est formé l'alésage (52), **caractérisée en ce que** le boîtier (2) présente, au niveau de son côté extérieur (24), un filet (22) servant à visser la bougie d'allumage dans une culasse, et l'alésage (52) étant formé dans une zone du filet (22), et **en ce que** le diamètre extérieur du boîtier (2) au niveau de la cavité (51) est inférieur au diamètre du noyau du filet (22).

2. Bougie d'allumage (1) selon la revendication 1, **caractérisée en ce que** l'électrode de masse (5) est soudée ou enfoncée dans l'alésage (52).

3. Bougie d'allumage (1) selon l'une des revendications 1 et 2, **caractérisée en ce que** l'alésage (52) est formé dans une zone du filet (22).

4. Bougie d'allumage (1) selon l'une des revendications précédentes, **caractérisée en ce que** la cavité (51) est réalisée sous la forme d'une rainure ronde, d'une rainure conique ou d'une surface plane dans la zone du filet (22).

5. Bougie d'allumage (1) selon l'une des revendications précédentes, **caractérisée en ce que** la chambre de précombustion (81) possède une chambre de précombustion arrière (81b) et une chambre de précombustion avant (81a), un volume de la chambre de précombustion arrière (81b) étant au moins égal à 1/3 du volume total de la chambre de précombustion (81).
